# FASCICULE DE BREVET EUROPEEN

(11) **EP 4 285 005 B1**
(45) Date de publication et mention de la délivrance du brevet: **08.04.2026**
(21) Numéro de dépôt: 22706071.2
(22) Date de dépôt: 26.01.2022
(51) Int. Cl.: F01D 17/10, F02C 6/08, F02C 9/18

(54) **SYSTÈME DE COMMANDE DE PORTES DE DÉCHARGE D'UNE TURBOMACHINE**
SYSTEM ZUR STEUERUNG VON ENTLADUNGSTÜREN EINER TURBOMASCHINE
SYSTEM FOR CONTROLLING DISCHARGE DOORS OF A TURBOMACHINE

(30) Priorité: 01.02.2021 FR 2100956
(43) Date de publication de la demande: 06.12.2023
(73) Titulaire: SAFRAN, 75015 Paris (FR)
(72) Inventeur: PARMENTIER, Nicolas Claude, 77550 MOISSY-CRAMAYEL (FR); PEREZ, Gabriel, 77550 MOISSY-CRAMAYEL (FR)
(74) Mandataire: Santarelli
(86) Numéro de dépôt international: PCT/FR2022/050137
(87) Numéro de publication internationale: WO 2022/162306

(56) Documents cités:
- EP-A1- 0 515 263
- EP-A1- 0 861 978
- FR-A1- 3 082 562
- US-A1- 2015 176 529

## Description

### DOMAINE TECHNIQUE

L'invention concerne la commande en ouverture et en fermeture d'un ensemble de portes de décharge équipant une turbomachine telle qu'un turboréacteur.

### ÉTAT DE LA TECHNIQUE ANTÉRIEURE

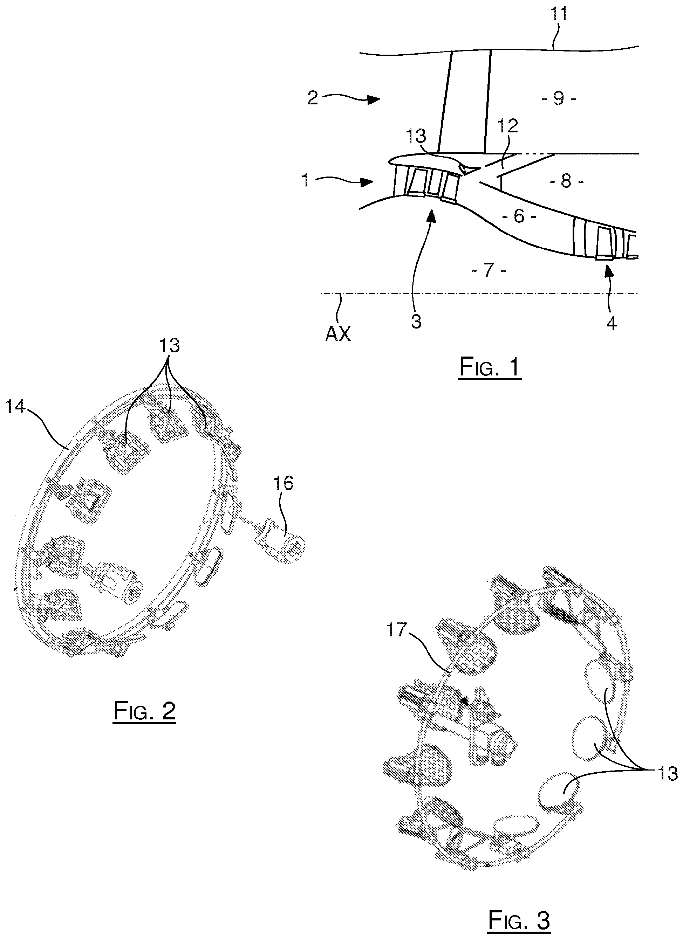

Un turboréacteur à double flux comporte une manche d'entrée admettant de l'air qui est aspiré par une soufflante, avant d'être divisé en un flux primaire 1 central et un flux secondaire 2 qui entoure le flux primaire, comme illustré sur la figure 1. Après avoir passé la soufflante, le flux secondaire est dirigé vers l'arrière pour générer une poussée.

Après avoir passé la soufflante, le flux primaire traverse un compresseur basse pression 3 puis un compresseur haute pression 4, avant d'atteindre une chambre de combustion pour être détendu dans une turbine haute pression puis dans une turbine basse pression, avant d'être expulsé en générant une poussée auxiliaire.

Le flux primaire circule dans un espace annulaire 6, appelé veine primaire, délimité intérieurement notamment par un rotor 7 et extérieurement par un carénage interveines 8. Le flux secondaire circule dans un autre espace annulaire 9, appelé veine secondaire, délimité intérieurement par le carénage interveines 8 et extérieurement par un carter externe 11.

Le carénage interveines 8 est traversé par des conduits de décharge 12, associés équipés de portes de décharge 13 usuellement désignées par l'acronyme VBV (Variable Bleed Valve), qui sont ouvertes dans certaines situations pour évacuer de l'air depuis le flux primaire vers le flux secondaire, afin d'éviter l'établissement d'un régime dit de pompage correspondant à une surpressurisation des compresseurs susceptible de les détériorer.

Comme représenté sur la figure 2, ces portes 13 sont régulièrement réparties circonférentiellement au niveau du carénage interveines 8, de sorte que leur ouverture et leur fermeture nécessite un système d'actionnement relativement complexe. Dans l'exemple de la figure 2, le système d'actionnement comporte un anneau de commande rotatif 14 longeant ces portes 13, chaque porte étant reliée à l'anneau par un agencement de biellettes. L'anneau 14 est déplacé en rotation par un moteur rotatif 16 pour le faire pivoter autour de l'axe de rotation AX du moteur de manière à ouvrir et fermer les portes sur commande de façon synchronisée.

Cet anneau a une épaisseur importante pour être suffisamment rigide, et il nécessite un guidage précis qui est assuré par des patins, ce qui constitue un ensemble de contraintes rendant un tel système de commande volumineux selon la direction axiale et selon la direction radiale. Un tel système est ainsi relativement complexe à mettre en œuvre, et par là-même coûteux.

Une alternative plus ancienne représentée sur la figure 3, consiste à prévoir un câble de commande 17, rigide en torsion et longeant les portes, chaque portes étant reliée à ce câble 17 par un jeu de biellettes. La commande consiste alors à faire pivoter le câble circonférentiel sur lui-même pour ouvrir et fermer les portes. En pratique, la rigidité en torsion du câble reste insuffisante, ce qui engendre une dispersion de l'ouverture des portes,

Les documents EP 0 861 978 A1 et US 2015/176529 A1 décrivent des turbomachines connues.

Dans ce cadre, l'objet de l'invention est de prévoir un système d'actionnement d'un tel ensemble de portes qui soit plus robuste et moins encombrant que les systèmes connus.

### EXPOSÉ DE L'INVENTION

A cet effet, l'invention a pour objet un système de commande de portes de décharge d'une turbomachine, selon **la** revendication 1, ce système comportant un anneau et des moyens de liaison de cet anneau à chaque porte de décharge, caractérisé en ce que l'anneau est formé de barres raccordées bout à bout par des liaisons en rotation assurant que le pivotement d'une barre sur elle-même engendre le pivotement des autres barres sur elles-mêmes, chaque porte de décharge étant reliée à une barre correspondante pour s'ouvrir ou se fermer sur pivotement de cette barre.

Avec cet agencement, les différentes barres ont seulement à être portées par des paliers de dimensionnement raisonnable, de sorte que l'ensemble d'entraînement est peu encombrant. L'entraînement du système consiste essentiellement à entrainer une barre pour qu'elle pivote sur elle-même afin d'actionner l'ensemble des portes, de sorte que l'actionnement du système est simple à mettre en oeuvre.

De plus l'anneau comprend une alternance de barres de commande et de barres de transmission, chaque barre de commande étant reliée à une porte de décharge correspondante.

L'invention concerne également un système ainsi défini, dans lequel les liaisons en rotation sont des liaisons de type joint de Cardan.

L'invention concerne également un système ainsi défini, comprenant un vérin lié à une barre par l'intermédiaire d'un levier d'actionnement pour la faire pivoter sur elle-même lorsqu'il s'allonge et se rétracte.

L'invention concerne également un système ainsi défini, comprenant un moteur lié en rotation à une barre par l'intermédiaire d'une liaison de type à vis sans fin pour faire pivoter cette barre sur rotation du moteur.

L'invention concerne également un système ainsi défini, comprenant un moteur lié en rotation à une barre par l'intermédiaire d'un réducteur pour la faire pivoter sur elle-même.

L'invention concerne également un système ainsi défini, comprenant une porte liée à une barre correspondante par un agencement comprenant un levier ayant une extrémité rigidement solidaire de la barre, et une biellette ayant une extrémité liée à la porte et son autre extrémité liée au levier, les extrémités de la biellette étant liées à la porte et au levier par des liaisons pivot d'axes parallèles à la barre.

L'invention concerne également une turbomachine comprenant un système de commande selon l'une des revendications précédentes.

L'invention concerne également un turboréacteur comprenant un système de commande selon l'une des revendications précédentes.

### BRÈVE DESCRIPTION DES DESSINS

La Figure 1 est une vue en coupe longitudinale d'une partie avant de turboréacteur ;
La Figure 2 est une vue en perspective d'un premier système de commande connu représenté seul ;
La Figure 3 est une vue en perspective d'un deuxième système de commande connu représenté seul ;
La Figure 4 est une représentation d'une turbomachine équipée du système de commande selon l'invention selon une vue en coupe transversale ;
La Figure 5 est une vue en coupe longitudinale montrant une porte de décharge actionnée avec le système de commande selon l'invention ;
La Figure 6 est une vue en coupe longitudinale montrant une porte de décharge actionnée par une variante du système de commande selon l'irivention ;
La Figure 7 est une vue en coupe longitudinale montrant une porte de décharge actionnée par une autre variante du système de commande selon l'irivention ;
La Figure 8 est une représentation de moyens d'entrainement en pivotement d'une barre du système de commande selon l'invention.

### EXPOSÉ DÉTAILLÉ DE MODES DE RÉALISATION PARTICULIERS

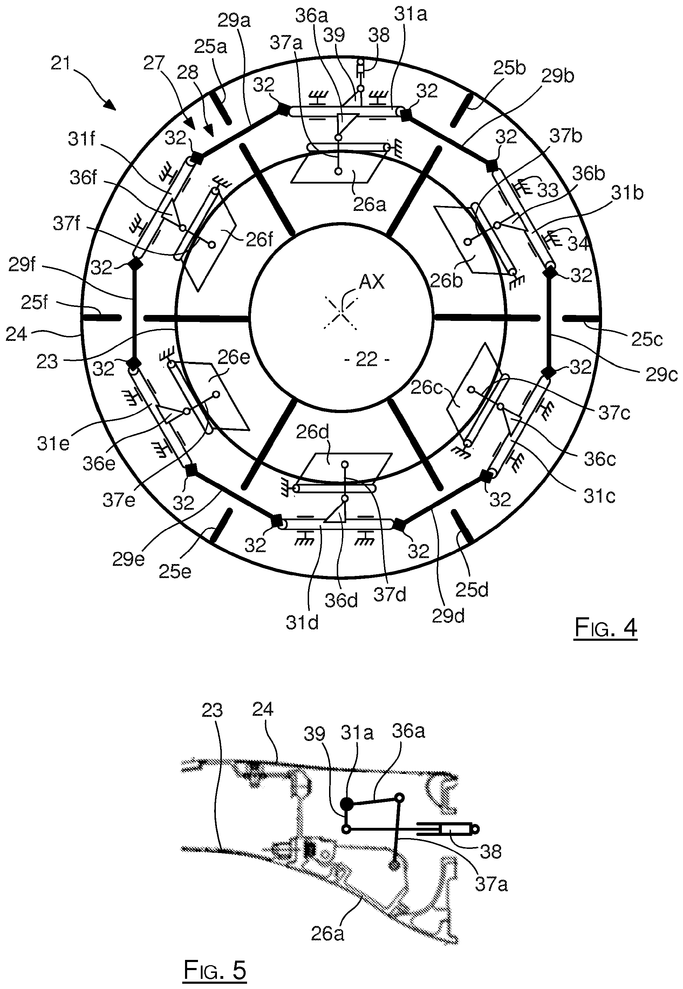

Sur la figure 4, un turboréacteur 21 comporte un rotor central 22 entouré par un carénage interveines comprenant une paroi interne 23 entourée par une paroi externe 24. l'espace annulaire s'étendant entre le rotor 22 et la paroi 23 constitue la veine primaire dans laquelle circule le flux primaire, et l'espace entourant la paroi externe 24 correspond à la veine secondaire dans laquelle circule le flux secondaire.

L'espace annulaire s'étendant entre les parois 23 et 24 du carénage interveines, qui est appelé espace interveines contient notamment des conduits de décharge non représentés permettant l'évacuation d'une partie du flux primaire vers le flux secondaire.

Le turboréacteur comporte six bras radiaux 25a-25f régulièrement répartis autour de l'axe de rotation du rotor qui est repéré par AX. Chaque bras 25a-25f s'étend radialement pour relier le carénage interveines à des supports non visibles du rotor 22.

Le carénage interveines est équipé de six portes de décharge, repérées par 26a-26f permettant lorsqu'elles s'ouvrent d'évacuer une portion du flux primaire vers la veine secondaire. Chaque porte de décharge est située entre deux bras radiaux et est apte à pivoter autour d'un axe orienté orthoradialement par rapport à l'axe AX.

Ces portes 26a-26f sont actionnées par un système de commande 27 comprenant un anneau 28 les entourant et qui est formé de douze barres raccordées bout à bout par des joints de Cardan.

Les barres formant l'anneau 28 comportent des barres de transmission 29a-29f et des barres de commande 31a-31f, qui sont disposées circonférentiellement en alternance en étant reliées les unes aux autres par des cardans repérés par 32. Chaque barre s'étend selon une direction orthoradiale par rapport à l'axe AX, et est apte à pivoter sur elle-même autour de son axe principal orienté orthoradialement.

Les barres de transmission et les barres de commande ont sensiblement la même longueur, leur agencement correspondant ainsi à un polygone régulier à douze côtés, comme visible sur la figure 4. Mais il est aussi possible d'utiliser des barres de transmission ayant une longueur différente de celle des barres de commande,

En pratique, le nombre de barres de commande correspond au nombre de portes, et le nombre de barres de transmission est un multiple du nombre de barres de commande, l'ensemble ayant un dimensionnement lui permettant de loger dans la région interne du carénage interveines.

Dans l'exemple de la figure 4, chaque barre de commande est portée par deux liaisons pivot 33, 34 qui sont portées par des éléments de structure non représentés. Chaque barre de transmission est quant à elle libre, c'est-à-dire portée uniquement par les deux barres de commandes auxquelles elle est reliée par les deux joints de Cardat) situés à ses extrémités, et elle traverse un bras radial correspondant par une ouverture formée dans celui-ci.

Chaque barre de commande 31a-31f porte un levier rotatif 36a-36f s'étendant perpendiculairement à cette barre, pour avoir son extrémité reliée à une porte correspondante par une biellette correspondante. Ces biellettes sont repérées par 37a-37f, et chaque biellette a une extrémité reliée à une porte par une liaison pivot et son extrémité opposée reliée à l'extrémité libre d'un levier par une autre liaison pivot, ces liaisons pivot ayant leurs axes de rotation orientés orthoradialement par rapport à l'axe AX.

Les leviers rotatifs 36a-36f s'étendent selon des directions sensiblement parallèles à l'axe de rotation du rotor alors que les biellettes 37a-37f s'étendent chacune selon une direction sensiblement radiale par rapport à l'axe du rotor, comme représenté schématiquement sur la figure 4.

Ainsi, lorsque la barre de commande 31a pivote sur elle-même, son levier 36a pivote avec elle, en ayant son extrémité liée à la porte 26a par la biellette 37a, de sorte que le pivotement de la barre de commande 31a engendre l'ouverture ou la fermeture de la porte 26a, attendu notamment que la barre de commande 31a pivote autour d'un axe qui est parallèle à l'axe de pivotement de la porte 26a. Comme on l'aura compris, le sens de rotation de la barre détermine s'il s'agit d'une commande d'ouverture ou de fermeture des portes.

Il en va de même des cinq autres ensembles comprenant les cinq autres barres actionnant les cinq autres portes.

Comme toutes les barres sont liées les unes aux autres par des liaisons de type joints de Cardans, le pivotement d'une barre sur elle-même engendre le pivotement de toutes les barres sur elles-mêmes, et par là même l'ouverture ou la fermeture des six portes, le sens de rotation conditionnant un mouvement soit d'ouverture soit de fermeture.

L'anneau 28 est mis en mouvement par un actionneur qui, dans l'exemple des figures 4 et 5 est un vérin linéaire 38, orienté parallèlement à l'axe AX en ayant son extrémité fixe reliée à une partie structurelle de la turbomachine, et son extrémité mobile reliée à un levier d'actionnement 39 porté par la barre 31a. Comme visible sur la figure 5, ce levier d'actionnement 39 s'étend radialement vers l'axe AX, perpendiculairement au levier 36a qui est également porté par cette barre 31a.

Dans cette configuration, la rétractation du vérin 38 engendre une rotation de la barre de commande 31a qui provoque l'ouverture de la porte 26a du fait qu'elle est reliée à celle-ci par le levier 36a et la biellette 37a, ainsi que l'ouverture de toutes les autres portes. D'une manière analogue, l'allongement du vérin 38 provoque la fermeture de la porte 26a et de toutes les autres portes.

D'une manière générale, le système comporte au moins un actionneur tel que le vérin 38, mais il peut aussi en comporter plusieurs, actionnant chacun une barre de commande, en étant régulièrement répartis à la circonférence du système de commande. Dans l'exemple de la figure 4 comportant six portes, on peut ainsi prévoir un, deux ou trois actionneurs.

Dans l'exemple des figures 4 et 5, l'actionneur utilisé est un vérin linéaire orienté axialement, mais d'autres types d'actionneurs peuvent aussi être utilisés.

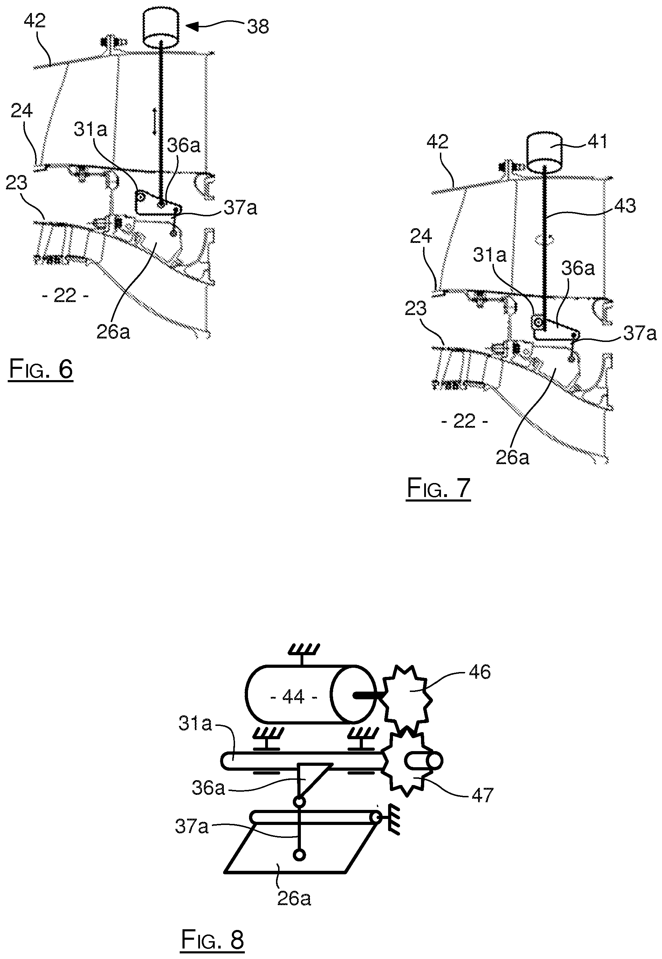

Ainsi, dans l'exemple de la figure 6, le vérin linéaire 38 est positionné radialement au lieu de s'étendre axialement comme dans le cas de la figure 5. Plus particulièrement, le vérin 38 est situé à l'extérieur de la veine secondaire en étant porté à la face externe du carter externe 42 entourant cette veine secondaire.

Ce vérin 38 est relié à l'espace interveines par l'intermédiaire de sa tige mobile qui traverse radialement la veine secondaire, et dont l'extrémité radialement interne est liée au levier 36a par une liaison de type pivot fixe. Ainsi, une rétractation du vérin 38 provoque un pivotement de la barre de commande 31a autour de son axe orthoradial, ce qui engendre une ouverture de la porte 26a à laquelle cette barre est reliée par le levier 36a et la biellette 37a, ainsi que l'ouverture des autres portes.

Il est également possible d'envisager une liaison de la tige du vérin à la barre par l'intermédiaire d'une liaison de type à crémaillère.

Dans l'exemple de la figure 7, l'actionneur du système est constitué par un moteur rotatif 41 qui est aussi situé hors de la veine secondaire en étant porté à la face externe du carter externe 42.

Ce moteur 41 est relié à l'espace interveines par l'intermédiaire d'un axe rotatif 43 traversant radialement la veine secondaire, et dont l'extrémité radialement interne comporte une vis sans fin engrenée dans une roue dentée portée par la barre de commande 31a. Une rotation de l'axe du moteur 41 autour de son axe radial provoque ainsi un pivotement de la barre de commande 31a autour de son axe orthoradial. Ceci engendre un déplacement de la porte 26a à laquelle elle est reliée par le levier 36a et la biellette 37a, ainsi que le déplacement des autres portes du système.

Il est également possible, comme illustré sur la figure 8 de prévoir un moteur rotatif 44 s'étendant le long de la barre de commande 31a pour l'entrainer en rotation au moyen d'une roue dentée 46 directement entrainée par ce moteur et qui est engrenée dans une autre roue dentée 47 portée par la barre de commande 31a, de façon à constituer un ensemble de type motoréducteur.

Dans l'exemple des figures, l'invention est appliquée à des portes de type basculantes, c'est-à-dire pivotant autour d'un axe, mais l'invention peut également être appliquée à des portes ayant une cinématique différente, comme par exemple des portes dont l'ouverture ou la fermeture correspond à un mouvement de translation combiné à une rotation.

## Revendications

1. Système de commande (27) de portes de décharge (26a-26f) d'une turbomachine, ce système comportant un anneau (28) et des moyens de liaison de cet anneau (28) à chaque porte de décharge (26a-26f), **caractérisé en ce que** l'anneau (28) est formé de barres (29a-29f, 31a-31f) raccordées bout à bout par des liaisons en rotation (32) assurant que le pivotement d'une barre sur elle-même engendre le pivotement des autres barres (29a-29f, 31a-31f) sur elles-mêmes, chaque porte de décharge (26a-26f) étant reliée à une barre correspondante (31a-31f) pour s'ouvrir ou se fermer sur pivotement de cette barre, et dans lequel l'anneau (28) comprend une alternance de barres de commande (31a-31f) et de barres de transmission (29a-29f), chaque barre de commande (31a-31f) étant reliée à une porte de décharge (26a-26f) correspondante pour l'ouvrir et la fermer.

2. Système selon la revendication 1, dans lequel les liaisons en rotation (32) sont des liaisons de type joint de Cardan (32).

3. Système selon la revendication 1, comprenant un vérin (38) lié à une barre (31a-31-f) par l'intermédiaire d'un levier d'actionnement (39) pour la faire pivoter sur elle-même lorsqu'il s'allonge et se rétracte.

4. Système selon la revendication 1, comprenant un moteur (41) lié en rotation à une barre (31a-31-f) par l'intermédiaire d'une liaison de type à vis sans fin pour faire pivoter cette barre (31a-31-f) sur rotation du moteur (41).

5. Système selon la revendication 1, comprenant un moteur (44) lié en rotation à une barre (31a-31-f) par l'intermédiaire d'un réducteur pour la faire pivoter sur elle-même.

6. Système selon la revendication 1, comprenant une porte (26a-26f) liée à une barre correspondante (31a-31f) par un agencement comprenant un levier (36a-36f) ayant une extrémité rigidement solidaire de la barre (31a-31-f), et une biellette (37a-37f) ayant une extrémité liée à la porte (26a-26f) et son autre extrémité liée au levier (36a-36f), les extrémités de la biellette (37a-37f) étant liées à la porte (26a-26f) et au levier (36a-36f) par des liaisons pivot d'axes parallèles à la barre (31a-31-f).

7. Turbomachine comprenant un système de commande selon l'une des revendications précédentes.

8. Turboréacteur comprenant un système de commande selon l'une des revendications précédentes.

## Patentansprüche

1. Steuersystem (27) für Entlastungsklappen (26a-26f) einer Turbomaschine, wobei dieses System einen Ring (28) und Mittel zur Verbindung dieses Rings (28) mit jeder Entlastungsklappe (26a-26f) beinhaltet, **dadurch gekennzeichnet, dass** der Ring (28) aus Stäben (29a-29f, 31a-31f) gebildet ist, die durch Drehverbindungen (32) durchgehend verbunden sind, die dafür sorgen, dass das Schwenken eines Stabes um sich selbst das Schwenken der anderen Stäbe (29a-29f, 31a-31f) um sich selbst bewirkt, wobei jede Entlastungsklappe (26a-26f) mit einem entsprechenden Stab (31a-31f) verbunden ist, um sich durch Schwenken dieses Stabes zu öffnen oder zu schließen, und wobei der Ring (28) ein Wechselspiel von Steuerstäben (31a-31f) und Übertragungsstäben (29a-29f) umfasst, wobei jeder Steuerstab (31a-31f) mit einer entsprechenden Entlastungsklappe (26a-26f) verbunden ist, um sie zu öffnen und zu schließen.

2. System nach Anspruch 1, wobei die Drehverbindungen (32) Verbindungen vom Typ Kardangelenk (32) sind.

3. System nach Anspruch 1, umfassend einen Zylinder (38), der über einen Betätigungshebel (39) mit einem Stab (31a-31-f) verbunden ist, um diesen bei dem Ausfahren und Einfahren um sich selbst schwenken zu lassen.

4. System nach Anspruch 1, umfassend einen Motor (41), der über eine Verbindung vom Typ einer Endlosschnecke mit einem Stab (31a-31-f) drehverbunden ist, um diesen Stab (31a-31-f) bei Drehung des Motors (41) schwenken zu lassen.

5. System nach Anspruch 1, umfassend einen Motor (44), der über ein Getriebe mit einem Stab (31a-31-f) drehverbunden ist, um ihn um sich selbst schwenken zu lassen.

6. System nach Anspruch 1, umfassend eine Klappe (26a-26f), die mit einem entsprechenden Stab (31a-31f) durch eine Anordnung verbunden ist, die einen Hebel (36a-36f) umfasst, der ein starr mit dem Stab (31a-31-f) fest verbundenes Ende aufweist, und ein Schaltgestänge (37a-37f), das ein mit der Klappe (26a-26f) verbundenes Ende und ihr anderes mit dem Hebel (36a-36f) verbundenes Ende aufweist, wobei die Enden des Schaltgestänges (37a-37f) durch Achszapfenverbindungen parallel zu dem Stab (31a-31-f) mit der Klappe (26a-26f) und dem Hebel (36a-36f) verbunden sind.

7. Turbomaschine, umfassend ein Steuersystem nach einem der vorstehenden Ansprüche.

8. Turbostrahltriebwerk, umfassend ein Steuersystem nach einem der vorstehenden Ansprüche.

## Claims

1. System (27) for controlling discharge doors (26a-26f) of a turbomachine, this system comprising a ring (28) and means for connecting this ring (28) to each discharge door (26a-26f), **characterised in that** the ring (28) is formed by bars (29a-29f, 31a-31f) connected end to end by rotary connections (32) ensuring that the pivoting of one bar on itself brings about the pivoting of the other bars (29a-29f, 31a-31f) on themselves, each discharge door (26a-26f) being connected to a corresponding bar (31a-31f) in order to open or close when this bar pivots, comprising alternating control bars (31a-31f) and transmission bars (29a-29f), each control bar (31a-31f) being connected to a corresponding discharge door (26a-26f) in order to open and close it.

2. System according to Claim 1, wherein the rotary connections (32) are universal joints (32).

3. System according to Claim 1, comprising an actuator (38) connected to a bar (31a-31f) via an actuating lever (39) to make it pivot on itself as it extends and retracts.

4. System according to Claim 1, comprising a motor (41) rotatably connected to a bar (31a-31f) via a worm screw type connection to make this bar (31a-31f) pivot when the motor (41) rotates.

5. System according to Claim 1, comprising a motor (44) rotatably connected to a bar (31a-31f) via a reduction gear to make it pivot on itself.

6. System according to Claim 1, comprising a valve (26a-26f) connected to a corresponding bar (31a-31f) by an arrangement comprising a lever (36a-36f) with one end rigidly attached to the bar (31a-31f), and a connecting rod (37a-37f) with one end connected to the valve (26a-26f) and its other end connected to the lever (36a-36f), the ends of the connecting rod (37a-37f) being connected to the valve (26a-26f) and to the lever (36a-36f) by pivot connections with axes parallel to the bar (31a-31f).

7. Turbomachine comprising a control system according to one of the preceding claims.

8. Turbojet engine comprising a control system according to one of the preceding claims.
